# EUROPEAN PATENT APPLICATION

(11) **EP 4 711 078 A1**
(43) Date of publication of application: **18.03.2026**
(21) Application number: 24199743.6
(22) Date of filing: 11.09.2024
(51) Int. Cl.: B23Q 17/09, B23Q 17/24, G01B 11/02

(54) **AN APPARATUS AND METHOD FOR CUTTING TOOL MEASUREMENT**

(71) Applicant: Renishaw plc, Wotton-under-Edge, Gloucestershire GL12 8JR (GB)
(72) Inventor: The designation of the inventor has not yet been filed
(74) Representative: Dunn, Paul Edward

(57) **Abstract**

A method and associated apparatus are described for assessing a rotatable cutting tool (50) having a plurality of cutting edges (58) that extend along its length (L) that is carried by a machine tool (4). The machine tool comprises a tool measurement device (2), such as a non-contact tool setting apparatus, for measuring the cutting tool (50). The method comprises using the tool measurement device (2) to measure a cutting edge profile (100,102; 120, 122; 300, 302) of each of the plurality of cutting edges (58). These cutting edge profiles (100,102; 120, 122; 300, 302) are together used to assess if any workpiece defects would be generated when machining a workpiece using the cutting tool (50). In particular, the method assesses if any cutting edge defects are present on more than one of the plurality of cutting edges (58) at a plurality of axial locations along the length of the cutting tool (50). In one embodiment, a composite tool profile (304) is used to assess if such defects are present. In this manner, it can be predicted if a cutting tool defect will result in a workpiece defect when that cutting tool is used.

## Description

The present invention relates to a method of cutting tool measurement, and in particular to a method of assessing whether a rotatable cutting tool carried by a machine tool includes cutting edge defects that would form a defect in a machined workpiece.

A variety of machine tools (e.g., turning machines, milling machines, drilling machines etc) are widely used in industry to cut workpieces. The machine tools retain a so-called cutting tool that is moved relative to the workpiece, typically under numerical control, to remove material from the workpiece. For example, a metal workpiece may be cut using a multi-toothed cutting tool that is held in, and rotated at high speed by, a spindle of a machine tool.

A cutting tool will inevitably wear and can potentially be damaged during a cutting process. For example, the cutting process may result in one or more edges of the cutting teeth of such a cutting tool becoming chipped, worn or experiencing an unwanted build-up of material. This is why many types of tool measurement apparatus have been developed that allow cutting tools to be inspected "on machine", typically between the performance of cutting operations, to a check for tool damage or wear.

US6496273 describes tool measurement apparatus mountable to a machine tool in which a beam of light is passed from a light source to a light detector. Interruption of the light beam by a tool is detected and used to measure the position of a point on the surface of the tool. Repeating the measurement allows different positions on the tool edge to be measured, which allows various cutting tool properties (such as tool length and/or tool diameter) to be measured. DE 10 2013 011 307 A1 and DE 195 28 376 A1 describe variants of such a break-beam tool setting apparatus. Such apparatus may also be used to check if a point on a cutting edge is damaged, although taking such point-by-point measurements along a tool edge is typically time consuming and tool defects occurring between the measured points have a high probability of being missed.

EP3679318 describes how tool profiles can be measured using a non-contact tool setting apparatus which traces a light beam around the periphery of a tool. This technique allows many more points around a tool periphery to be measured than the point-by-point measurement techniques described in US6496273. In this manner, the edges of cutting tools may be more quickly and comprehensively checked for any damage or wear.

Once a cutting edge defect above a certain size or tool wear of a certain magnitude has been identified in a cutting tool, that tool is typically replaced. A cautious approach is often taken, with cutting tools being replaced as soon as a cutting edge defect is detected in order to prevent workpieces being machined that comprise defects and consequently may need to be scrapped or re-worked. The present inventors have, however, realised that damage to the cutting edge of a cutting tool may not always cause that tool to form a defect in a subsequently machined workpiece.

According to a first aspect of the present invention, there is provided a method for assessing a rotatable cutting tool carried by a machine tool, the rotatable cutting tool having a plurality of cutting edges that extend along its length, and the machine tool comprising a tool measurement device for measuring the cutting tool, the method comprising the steps of;
(a) using the tool measurement device to measure a cutting edge profile of each of the plurality of cutting edges that allows cutting edge defects to be identified, and
(b) assessing if any workpiece defects would be generated when machining a workpiece using the cutting tool, the assessment comprising using the cutting edge profile measurements of step (a) to determine whether any cutting edge defects are present on more than one of the plurality of cutting edges at a plurality of axial locations along the length of the cutting tool.

The present invention thus comprises a method performed on a machine tool, often called a computer numerically controlled (CNC) machine tool, that carries a rotatable cutting tool. A cutting (machining) process can be performed using such a machine tool by bringing the cutting tool, which is rotated at a relatively high speed, into contact with the workpiece. The machine tool may comprise a spindle for carrying and rotating the rotatable cutting tool. Examples of such machine tools include milling machine, machining centres etc. As noted above, the rotatable cutting tool has multiple (two or more) cutting edges. A cutting edge is the protruding, typically sharpened edge of the cutting tool that is designed to remove material from the workpiece. As such, a cutting edge is also the part of the tool most likely to become worn or damaged during the cutting process. The cutting tool may comprise a plurality of teeth or flutes which provide the cutting edges that extend along the length (i.e., along a longitudinal axis) of the cutting tool. During a machining process, the cutting tool is rotated about its longitudinal axis by the machine tool whilst it is moved into contact with the workpiece, thereby repeatedly bringing the various cutting teeth into contact with the surface in rapid succession to cut away workpiece material.

The machine tool used in the present method also includes a tool measurement device to allow the on-machine (in-process) inspection of the cutting tools used to machine workpieces. As mentioned above, a machine tool is a relatively harsh environment and the cutting process can cause the cutting tools to wear and become damaged (e.g., chipped) during use. A tool measurement device allows the automated and rapid inspection of such tools and also allows the tool location to be measured or set prior to a cutting operation. In recent years, the inclusion of such tool measurement devices has become more commonplace because it allows cutting tools to be replaced when too damaged or worn to be able to cut workpieces to the desired tolerances. As described below, the tool measurement device installed on the machine tool may comprise a non-contact tool setting apparatus such as the NC4-Blue tool setter manufactured and sold by Renishaw plc, Wotton-Under-Edge, UK.

The method of the present invention comprises a step (a) of using the tool measurement device to measure a profile of each of the plurality of cutting edges. In particular, the cutting edge profiles measured during this step allow any cutting edge defects (e.g., damage, material build-up etc) to be identified. In a preferred example, step (a) comprises using the tool measurement device to scan along each cutting edge in turn to determine each cutting edge profile. This may be done using a contact, or preferably a non-contact, tool measurement device. It is also preferred that a high density of data points are collected during such a scan to ensure any damage to the cutting edge is not missed.

The method also includes a step (b) of assessing whether any defects present in the cutting edges would result in workpiece defects (i.e., if the cutting tool was subsequently used to machine a workpiece). This assessment step comprises using the cutting edge profiles (i.e., the cutting edge profile of each of the plurality of cutting edges) that were measured in step (a). In particular, the step (b) comprises determining if any cutting edge defects are present on more than one of the plurality of cutting edges at a plurality of axial locations along the length of the cutting tool. As explained below, this assessment may be implemented by forming a composite tool profile or by separately identifying defect locations in each cutting edge and ascertaining if any such defects occur at the same axial location.

The method of the present invention thus goes beyond simply measuring the profile of the cutting edges of a cutting tool and provides the machine tool user with an ability to determine if cutting tool defects (e.g., chips in a cutting edge etc) will result in a defect in future workpieces to be cut using the inspected cutting tool. As explained below, a threshold may be set to define whether any such workpiece defects are acceptable and this may change from application to application, or on different regions of a workpiece. For example, a higher quality of surface finish may be required on one area of a workpiece compared to another (e.g., external decorative features may require a better surface finish than an internal surface). If unacceptable workpiece defects are identified, the cutting tool may be replaced. In this manner, cutting tools can be replaced only as and when required. This may mean some cutting tools can be used for longer (i.e., reducing tooling costs), whereas other cutting tools may need to be replaced sooner (i.e., to prevent workpieces being machined that are outside of tolerance and need to be scrapped).

The present invention has been found to be particularly advantageous for inspecting cutting tools used for machining (e.g. milling) cast Aluminium. Such cast Aluminium typically includes impurities or voids (i.e., hard spots) that can chip a cutting edge of a rotating cutting tool. It is not possible to predict when or where such an impurity/void will be encountered by the cutting edge (i.e., it could happen the very first time a cutting tool is used or the five-hundredth time). Furthermore, once a single cutting edge has been chipped, an increased cutting load will be placed on the other cutting edges at that same axial location which will also increase the probability of such cutting edges wearing or being damaged. The present invention allows regular cutting tool inspections to be performed that can identify when such a cutting tool needs to be replaced.

Advantageously, the assessment of step (b) comprises determining whether any cutting edge defects are present on a predefined number of the plurality of cutting edges at any of the plurality of axial locations along the length of the cutting tool. For example, if the method was applied to a cutting tool having four flutes (cutting teeth) then step (a) could comprise measuring the cutting edge of each flute. It may be known that damage to a certain proportion of flutes at a given axial location reduces the cutting quality provided by that tool to an unacceptable level. For example, it may be that chips at the same axial location on two of the flutes does not significantly degrade the surface finish of a cut but that if three flutes are chipped then there is an unacceptable degradation in surface finish (e.g., because one cutting edge alone is inadequate to cut the workpiece with the require quality of surface finish). Step (b) could then assess if workpiece damage would occur when using that tool by ascertaining if a certain predetermined number (e.g., two, three or all four) of those flutes were damaged at each of the plurality of axial locations. They may, of course, be any number of cutting edges and the predefined number could be set based on various factors.

In a preferred embodiment, the assessment of step (b) comprises determining whether any cutting edge defects are present on all of the plurality of cutting edges at any of the plurality of axial locations along the length of the cutting tool. In other words, the assessment step may establish if there are no undamaged cutting teeth at any of the axial locations along the length of the tool. Such cutting tool damage may indicate that the tool is no longer able to machine workpieces to an acceptable quality and needs to be replaced.

The cutting edge profile measurements of step (a) may be performed in a variety of ways, which may depend on the tool measurement device which is installed on the machine tool. The measured cutting edge profiles may comprise a series of tool edge position measurements defined in the machine tool coordinate system, or relative to a local (e.g., cutting tool) coordinate system. Advantageously, each cutting edge profile measurement of step (a) comprises measuring a deviation of the cutting edge from a reference. Conveniently, the reference comprises a reference axis. For example, the reference axis may be the axis of tool rotation. In this manner, the deviation of each cutting edge from a reference provides a measure of the extent that each cutting edge protrudes from the axis of tool rotation. Advantageously, each cutting edge profile measurement of step (a) comprises measuring a deviation of the cutting edge from a reference cutting edge profile. In other words, the above-mentioned reference may comprise a reference cutting edge profile for each cutting edge. Preferably, the measured cutting edge profile may describe the deviation of the cutting edge from a nominal or previously measured cutting edge.

As explained below, in a preferred embodiment the tool measurement device comprises a non-contact tool setting apparatus. The cutting edge profile may then be measured by defining a tool path (i.e., which imparts relative motion between the non-contact tool setting apparatus and the cutting tool) that would produce a predetermined (nominal) amount of beam obscuration (e.g., 50%) if the cutting edge being measured exactly matched the reference (e.g., the reference cutting edge profile). Any reduction or increase in the received beam intensity as the path is traversed would provide a measure of deviations in the cutting edge away from the reference. For example, any chips in the tool edge (i.e., a so-called "material-off" condition) would allow more light to reach the detector. Conversely, the build-up of material on a cutting edge (i.e., a so-called "material on" condition) would reduce the amount of light reaching the detector. The cutting edge profile measurements may thus, in such an embodiment, comprise the received light intensity as the tool path is traversed.

As mentioned above, the reference may comprise a reference cutting edge profile. Advantageously, each reference cutting edge profile comprises a nominal cutting edge profile. The nominal cutting edge profile may be derived from a CAD model of the cutting tool or from data provided by the cutting tool manufacturer. In such a case, step (a) may include measuring deviations of each cutting edge by comparing the measured cutting edge profile to the nominal cutting edge profile. The cutting edge profile measurements may thus define deviations of the cutting edge from the nominal cutting edge profile. As noted above, such a nominal cutting edge profile may be embodied in a predefined tool path.

Preferably, each reference cutting edge profile comprises a previously measured cutting edge profile. The previous measurement of the cutting edge profile may be performed on the same machine tool. Alternatively, the cutting edge profiles of the cutting tool may have been measured previously using a different measurement apparatus (e.g., an off-line tool inspection apparatus). The previously measured cutting edge profile may have been measured prior to use of the cutting tool for machining a workpiece (e.g., when the cutting tool was unused, visually checked as being defect free or when it was first installed on the machine tool). In this example, step (a) includes measuring deviations of the cutting edge by comparing the measured cutting edge profile to the previously measured cutting edge profile. This step may also be performed by measuring the cutting tool using the same tool path used for a previous (reference) measurement of the cutting tool.

The cutting edge that radially extends the most from the reference (e.g., the largest protrusion or the smallest indentation) will be the cutting edge that defines the amount of material removed at that axial position along the cutting tool. Advantageously, step (b) comprises identifying the cutting edge that radially extends the most relative to its reference (e.g., its reference cutting edge profile) at each of the plurality of axial locations along the length of the cutting tool. For example, the maximum deviation of a cutting edge from its reference cutting edge profile may be determined at each axial location.

In a preferred embodiment, step (b) comprises forming a composite tool profile using the cutting edge location of the cutting edge that radially extends the most relative to its reference (e.g., from the reference axis or the reference cutting edge profile) at each of the plurality of axial locations along the length of the cutting tool. Such a composite tool profile may provide an easy to understand representation of how the cutting tool will interact with a workpiece during a machining operation. In other words, such a composite tool profile may allow tooling defects to be more easily identified. For example, if only one tooth of a multi-tooth tool is chipped at a given axial location on the tool, there will still be other cutting edges that will engage and cut the workpiece. The composite tool profile will therefore not show chips because they are not likely to impact the cut made in the workpiece by the cutting tool. However, chips in all of the cutting edges at one axial location will be visible in the composite tool profile plot and will affect the feature cut in the workpiece (e.g., if all cutting edges are chipped at a certain axial location a ridge may be formed on the workpiece). Such a composite tool profile thus shows an effective cutting dimension, or change in cutting dimension relative to a reference dimension, as a function of axial position.

Although the embodiments outlined below describe forming a composite tool profile using the cutting edge that radially extends the most (relative to its reference), it would also be possible to form such a composite tool profile using a different cutting edge. For example, if the cutting tool had three or more cutting edges it would be possible to form a composite tool profile from the second most radially extending cutting edge at each axial location. This could be advantageous if the surface finish quality of the workpiece was found to degrade to an unacceptable level unless two cutting edges were undamaged. In this example, the composite tool profile would show the condition of the "second best" cutting edge because it is such a cutting edge that would determine whether the cutting quality provided by tool was acceptable. If more than three cutting edges were provided, it would of course be possible to form the composite tool profile from the third, fourth etc most radially extending cutting edge.

Advantageously, step (b) comprises determining a likely size of the workpiece defect generated when the cutting tool is used to machine a workpiece. In other words, a threshold may be applied in determining if any defects in the cutting edge profiles that are measured in step (a) will likely translate into a workpiece defect. This step may comprise assessing the size of each cutting edge defect. For example, by comparing the size of each cutting edge defect to a threshold. Alternatively, a composite tool profile may be calculated and compared to a threshold to ascertain if a workpiece defect will likely be generated if the cutting tool was used. It would also be possible to characterise workpiece defects of different sizes. For example, a graded scale of defect size may be used to indicate how closely the workpiece will conform to tolerance if cut by the relevant cutting tool. It should also be remembered that the machining requirements and tolerances may be different for different portions of the workpiece and hence for different regions of the cutting tool. For example, there may be a need for tighter tolerances in regions cut by the tool tip.

An output of step (b) may be an indication that the cutting tool is, or is not, suitable for machining the workpiece. In other words, a simple pass or fail status or an error flag may be generated for the cutting tool. Advantageously, step (b) may comprise issuing a workpiece error if a predicted size of a workpiece defect exceeds a preset allowable defect size. This is particularly suited to automated tool checking measurements that are taken periodically or between workpiece machining operations.

As mentioned above, the method may be used to determine if material has built-up on the cutting edges of the tool (so-called "material-on") and/or if material has been removed from the cutting edges of the tool (so-called "material-of"). Advantageously, the cutting edge defects of step (b) comprise indentations (chips etc) in the cutting edge (i.e., material-off).

Instead of using the composite tool profile to provide a measure of workpiece defect size, it would also be possible to use the composite tool profile to predict other types of defects that may be formed in a workpiece. For example, the composite tool profile may be used to predict the surface finish (e.g. surface roughness, waviness etc) of a workpiece and indicate an error when the surface finish fails to meet a predefined tolerance. In this manner, the technique could be used for process control.

The machine tool may include a tool measurement device that allows a cutting edge profile of a cutting tool to be measured. The tool measurement device could be a contact device. For example, the tool measurement device could comprise a measurement probe or contact tool-setter having a stylus that can be moved along each cutting edge. Advantageously, the tool measurement device is a non-contact device. For example, the tool measurement device may be an optical tool measurement device. A non-contact (e.g., optical) tool measurement device has the advantage of being able to detect smaller chips and that there is no contact of a stylus or the like with the cutting edge (i.e., preventing any blunting of the cutting edge by the tool measurement device). In a preferred embodiment, the tool measurement device comprises a non-contact tool setting apparatus device. The non-contact tool setting apparatus may comprise a transmitter for passing a light beam to a receiver, the receiver generating an output signal indicative of the amount of obscuration of the light beam.

Advantageously, step (a) comprises using the tool measurement device to scan along each cutting edge of each cutting tooth in turn. In other words, the cutting edges are preferably measured sequentially (i.e. one after the other). The tool profiles of step (a) may be measured using the techniques described in EP3679318. Such a method is preferred to measuring all edges at one longitudinal position before moving to another longitudinal position, because it requires the collection of less data (i.e., no data is collected from regions of the tool between the cutting edges) and typically allows a higher density of measurements points to be collected in a set period of time.

The rotatable cutting tool may comprise any rotatable cutting tool having two or more cutting edges. The cutting tool may comprise two or more teeth or flutes that provide the cutting edges. The cutting edges may be straight (i.e., linear). The cutting tool may be elongate. The cutting tool may comprise a cutter having a plurality of cutting inserts. For example, the cutting tool may comprise a hedgehog milling cutter or shoulder cutter. The cutting tool preferably comprises a helical cutting tool having two or more cutting edges. Step (a) may comprise translating the helical cutting tool relative to the tool measurement device along its longitudinal axis whilst rotating the helical cutting tool, the combined translational and rotational motion enabling the tool measurement device to scan along a cutting edge to measure each cutting edge profile. In other words, the tool profile may be measured using the method described in the present Applicant's co-pending European patent application No. 23197642.4 (Agent's Reference: 1240/EP/0).

According to a second aspect, there is provided an apparatus comprising a machine tool having a rotatable spindle for retaining a cutting tool having a plurality of cutting edges that extend along its length, the apparatus further comprising a tool measurement device mounted to the machine tool for measuring the cutting tool when held in the spindle, wherein the machine tool comprises a controller configured to (a) enable the tool measurement device to measure a cutting edge profile of each of the plurality of cutting edges that allows cutting edge defects to be identified, and (b) assess if any workpiece defects would be generated when machining a workpiece using the cutting tool, the assessment comprising using the measured cutting edge profile measurements to determine whether any cutting edge defects are present on more than one of the plurality of cutting edges at a plurality of axial locations along the length of the cutting tool.

There is also described herein a method for assessing a rotatable cutting tool carried by a machine tool, the rotatable cutting tool having a plurality of cutting edges that extend along its length, and the machine tool comprising a tool measurement device for measuring the cutting tool, the method comprising the steps of;
(i) using the tool measurement device to measure a cutting edge profile of each of the plurality of cutting edges, and
(ii) using the cutting edge profiles collected in step (i) to generate a composite tool profile describing an effective cutting property of the cutting tool at each of a plurality of axial locations along the length of the cutting tool.

Advantageously, the effective cutting property of the cutting tool comprises an effective cutting radius. The effective cutting radius may comprise the radial location of the furthest radially extending cutting edge. The radial location may be measured relative to a reference. For example, the reference may comprise the axis of tool rotation. Alternatively, the reference may comprise a nominal or previously measured cutting edge profile. The composite profile may describe the radial location of the furthest extending cutting edge at the plurality of axial locations along the length of the cutting tool. It should be noted that the cutting edge that extends furthest may vary with location along the tool (e.g., when various different cutting edges are chipped or worn etc).

As explained above, for some cutting tools having three or more cutting edges it may be necessary for two or more cutting edges to engage the workpiece to ensure the workpiece is cut as required (e.g., with an acceptable form and/or surface finish). For example, if the cutting tool has three or more cutting edges extending along its length, the effective cutting property of the composite tool profile may comprise the radial location of the second furthest radially extending cutting edge. If the cutting tool has four or more cutting edges extending along its length, the effective cutting property may comprise the radial location of the third furthest radially extending cutting edge etc. In other words, the effective cutting property may comprise the radial location of the N^{th} furthest radially extending cutting edge when the tool has at least N+1 cutting edges.

The composite tool profile produced by the method may be used to identify defects. Alternatively, the composite tool profile may be used to predict the form or a surface property of a workpiece that is subsequently cut using that cutting tool. For example, the composite tool profile may be used to predict the surface finish (e.g. surface roughness, waviness etc) of a workpiece. An error may be flagged if the predicted surface finish and/or form of a workpiece would exceed a tolerance. In this manner, the technique could be used for process control.

The present invention will now be described, by way of example only, with reference to the accompanying drawings in which;
Figure 1 shows a non-contact tool measurement device mounted to a machine tool,
Figures 2A and 2B show perspective and end (tip) views of a three-fluted cutting tool,
Figure 3 illustrates cutting edges of the tool of figures 2A and 2B when chipped along with a combined tool profile plot,
Figure 4 shows an image of a nominal two tooth end mill,
Figure 5 shows the measured cutting edge profiles of the two teeth of a first (new) tool of the type shown in figure 4,
Figure 6 shows the measured cutting edge profiles of the two teeth of a second (used) tool of the type shown in figure 4,
Figure 7 shows a composite tool profile formed from the measured profiles of the cutting edges shown in figure 5,
Figure 8 shows a composite tool profile formed from the measured profiles of the cutting edges shown in figure 6,
Figure 9 is a photograph of the surface of a metal block that has been cut using the first and second tools of figures 4 to 8 after those tools were measured,
Figures 10A and 10B show the three-dimensional and two-dimensional surface profiles of the surface of the metal block shown in figure 9 in a region cut by the first tool as measured using an optical profiler device,
Figures 11A and 11B show the three-dimensional and two-dimensional surface profiles of the surface of the metal block shown in figure 9 in a region cut by the second tool as measured using an optical profiler device, and
Figures 12A, 12B and 12C show the generation of a composite scan from a two-toothed cutting tool that allows the calculation of the surface profile of a workpiece processed by that cutting tool.

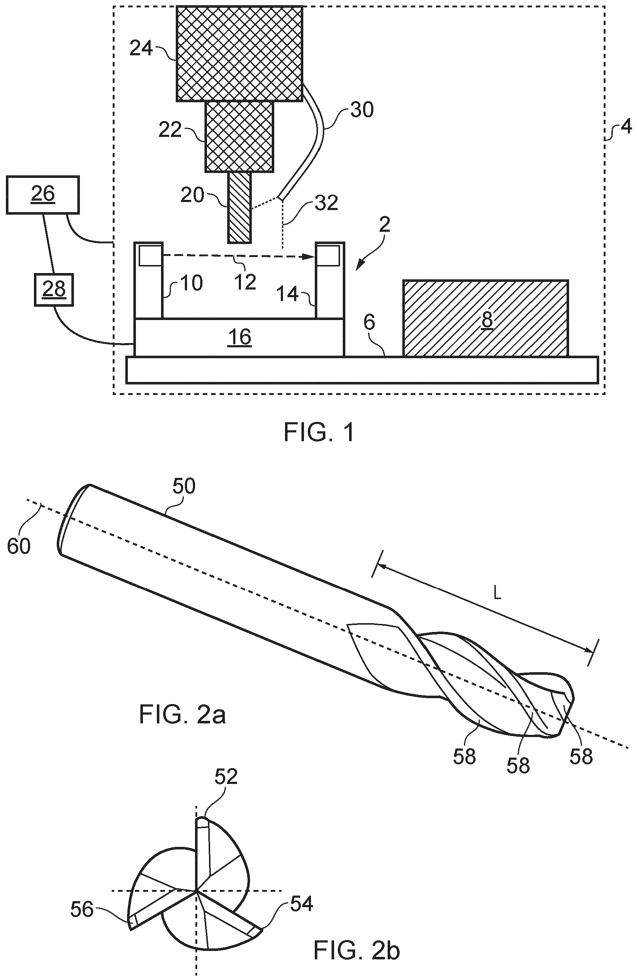

Referring to figure 1, a tool measurement device in the form of a non-contact tool setting apparatus 2 is shown mounted inside the enclosure of a machine tool 4. The machine tool 4 includes a head 24 that can be translated in three orthogonal directions (x,y,z) carrying a rotatable spindle 22. In this example, the spindle 22 is shown holding a cutting tool 20. The spindle 22 allows the tool 20 to be rotated about its longitudinal axis. A spray of coolant 32 may be supplied via pipe 30 to provide cooling and lubrication when the cutting tool 20 is cutting material from the workpiece 8.

The tool setting apparatus 2 comprises a transmitter 10 having a laser diode and suitable optics (not shown) for generating a beam of light 12. A receiver 14 comprising a photodiode (not shown) receives the beam of light 12. The transmitter 10 and receiver 14 are both affixed to a common base 16. This arrangement ensures the transmitter 10 and receiver 14 maintain a fixed spacing and orientation relative to one another. The base 16 is affixed to the bed 6 of the machine tool, although it could be mounted in any appropriate location within the machine tool enclosure. It should also be noted that various alternative structures for mounting the transmitter and receiver could be used. For example, a common housing for the transmitter and receiver could be provided or discrete transmitter and receiver units could be separately mounted to the machine tool.

A tool setting interface 28 is connected to the transmitter 10 and receiver 14. The interface 28 provides electrical power to the transmitter 10 and receiver 14 and also receives a beam intensity signal from the photodiode detector of the receiver 14. The interface 28 comprises an analogue to digital convertor (ADC) that samples the analogue beam intensity signal generated by the receiver 14 and generates a stream of digital beam intensity values. This stream of digital beam intensity values, also termed the beam intensity data, can also be analysed by a digital signal processor (DSP, not shown) within the interface 28. Alternatively, such analysis of the beam intensity data could be performed by the controller 26 or by an external computer (not shown). The interface 28 is also connected to the numerical controller 26 of the machine tool. The numerical controller 26 controls the motion of the translational axes of the machine tool (i.e., so the spindle 22 and tool 20 etc can be moved around in x, y, and z) and also the rotational angle of the spindle 22 (i.e. so the cutting tool 20 can be rotated about its longitudinal axis). Other machine tool configurations would, of course, be possible. For example, the table could be moved to provide some or all of the relative motion between the tool 20 and the light beam 12.

The use of the above-described apparatus to scan along the periphery of a tool has been described previously in EP3679318, so will only be briefly described here. The present Applicant's co-pending European patent application No. 23197642.4 (Agent's Reference: 1240/EP/0) further describes how the cutting edges of a helical cutting tool can be measured using such a non-contact tool setting apparatus by a combination of axial translation of the light beam along the length of the tool combined with co-ordinated rotational motion of the tool that maintains the relevant cutting edge in the light beam. In this manner, any chips, material build-up or other damage to the cutting edge of such a helical tool can be measured in a single scanning motion and repeated for each tooth.

Referring to figures 2A and 2B, a helical cutting tool 50 having three cutting teeth is illustrated. Figure 2A shows a side-on perspective view of the cutting tool 50 and figure 2B shows an end view of the tool tip in which the first tooth 52, the second tooth 54 and the third tooth 56 can be seen. Each of these three teeth has a cutting edge 58 that extends along and helically precesses about the tool's longitudinal axis 60. The cutting tool 50 is a milling tool that can be held in the spindle of a machine tool of the type described with reference to figure 1 and, when used for cutting, is rotated at a high speed (e.g., at many thousands or tens of thousands of revolutions per minute, depending on the machining application) before being brought into contact with the workpiece.

The cutting edges of the teeth 52, 54 and 56 will gradually wear over time and such tools regularly become chipped or damaged during use. Although the progression of tool wear with usage can often be estimated, it is typically not possible to reliably predict if a tool will become chipped or damaged and hence the need for periodic, in-situ (on-machine) tool measurements. The various non-contact tool setting methods described above allow the profiles of the cutting edges of such cutting teeth to be measured and previously the tool was typically replaced when it was detected that a certain number of chips above a certain size were present on the cutting edges of the tool.

The present inventor has, however, appreciated that not all chips or damage (i.e., cutting edge defects) will result in a corresponding workpiece defect in any workpieces that are cut using that cutting tool. In particular, it has been found that even with quite a large number of chips present on the cutting edges the cutting tool can still produce workpieces without any noticeable workpiece defects. Conversely, in other cases, workpiece defects can occur with only a relatively small number of cutting edge defects present. This makes it difficult to determine when such a cutting tool should be replaced. In order to ascertain if the cutting edge defects will translate into workpiece defects, the formation of a composite tool profile from the various profile measurements of the individual cutting edges has been devised. This will now be described below in more detail.

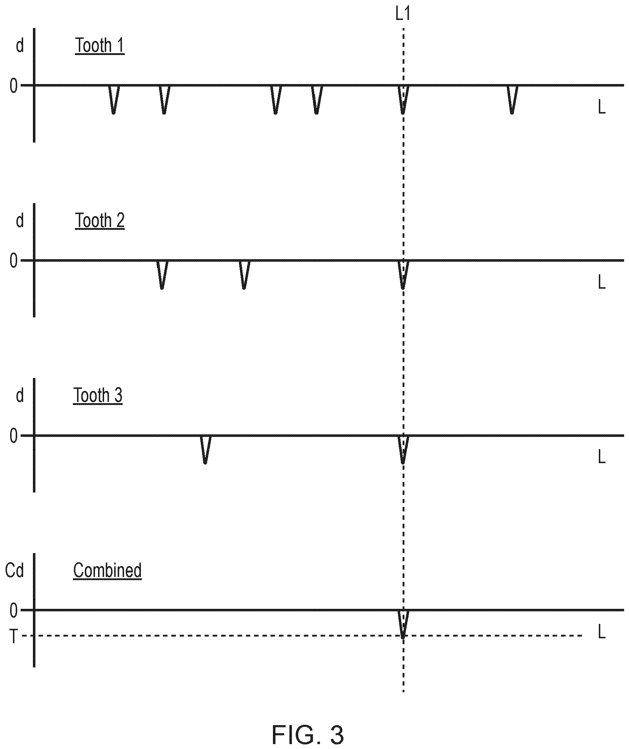

Referring to figure 3, a schematic tool edge profile of each of the cutting edges of the first to third teeth 52, 54 and 56 of the cutting tool 50 shown in figure 2 are illustrated. The tip of the tool is to the right of the plots and the length L along the tool is aligned for all the teeth. For each tooth, the cutting edge profile is collected by arranging the light beam of the non-contact tool setting apparatus to scan along the cutting edge of the tooth. In particular, the tool is slowly rotated whilst being moved relative to the light beam in an axial direction so that for a perfect (nominal) tool the imparted relative motion would ensure that half of the light beam was always occluded by the cutting edge. Any positive deviations of the cutting edge from nominal (e.g., due to the build-up of extra material on the cutting edge) results in more light being occluded whereas any negative deviations of the cutting edge from nominal (e.g., due to chips in the cutting edge) results in more light passing to the receiver. Figure 3 schematically illustrates, for each of the three teeth, various negative deviations (dips) in the surface profiles of the cutting edges that would arise when scanning along the length of the tool from chips in those cutting edges.

Looking at figure 3 in more detail, the three teeth can each be seen to have several chips (cutting edge defects) located at various points along the length (L) of the tool. However, it must be remembered that the tool will be rotated at a high speed (e.g., many thousands of revolutions per minute) when cutting a workpiece and hence the surface of the workpiece isn't machined (cut) by just a single tooth. This means that chips in just one or even two of the teeth at a particular axial location will not result in a defect being cut in the surface of the workpiece. In other words, even if two of the cutting edges include chips at the same axial location along the tool the third tooth will remove the necessary material from the workpiece. Although multiple cutting edge chips can be seen in the plotted cutting edge profiles, the majority of these will not alter the overall profile being cut in the workpiece. However, at the position L1 each of the three cutting edges are chipped. This means that when the cutting tool engages and cuts a workpiece, the effective cutting size of the tool at the L 1 position is reduced. This will result in a ridge of material remaining on the workpiece.

To identify locations along the tool length where each of the cutting edges include a defect (such as a chip), a combined or composite tool profile can be generated from the three cutting edges profiles of the three cutting teeth. In particular, the combined plot shown in figure 3 shows the location of the most-protruding cutting edge at each location along the cutting tool. Apart from the location L 1, this equates to the nominal or expected cutting edge location of a tooth. However, at the location L1 there is a dip in composite plot which indicates the presence of chips in each of the three teeth which will likely result in a defect being formed in any workpiece that is cut using that cutting tool. It should be noted that the size of the dip will equate to the smallest chip and a threshold level T can be applied to indicate when a tool has an unacceptable level of damage. For example, if the composite plot dips below the threshold T, then the tool may flagged as damaged (i.e. so it can be replaced before it is used to cut a defective workpiece).

Figure 3 is a simplified example and shows only the effect of chips of equal size on a tool with three teeth. There may be other tool damage. For example, material may build-up on the tool resulting in positive peaks in the cutting edge location. In such a case the highest peak will be visible in the composite plot (i.e., because that peak will define how much material is removed from the workpiece). The tool may also have more, or fewer, teeth. However, the same principles can be applied.

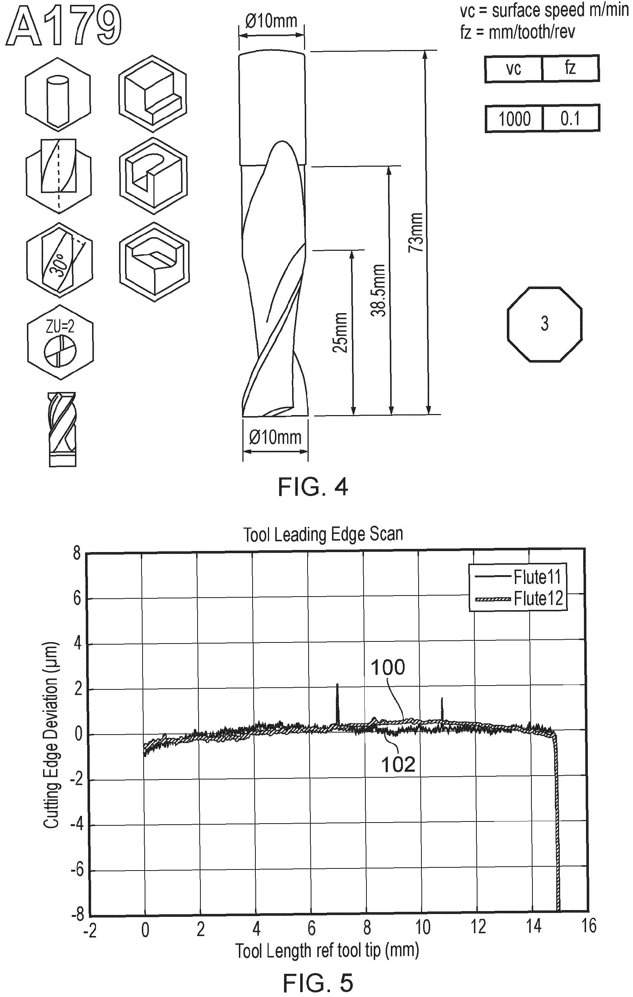

Referring to figures 4 to 11B, an example of how the above technique can be used to predict workpiece defects will be described.

Figure 4 shows a commercially available milling tool having two teeth. Such a milling tool can be used for various milling operations on a CNC machine tool of the type described with reference to figure 1.

Figure 5 shows the measured cutting edges profiles of a first milling tool of the type shown in figure 4. This first milling tool is a relative new milling tool that has yet to be used for cutting purposes. The first profile 100 of the first cutting edge and the second profile 102 of the second cutting edge are measured for a length of about 15mm from the tip of the tool (with the tip of the tool located on the right of the plot). The measurements shown in figure 5 show the deviations of the two cutting edges from the nominal (expected) cutting edges and are measured using a Renishaw NC4-Blue laser tool setting system that implements the scanning technique described in more detail above.

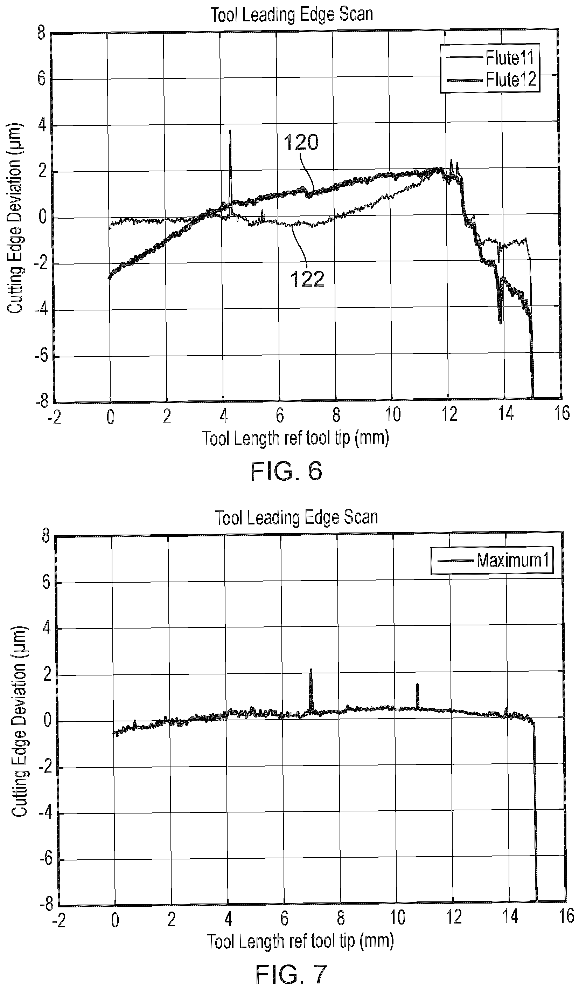

Figure 6 shows the measured cutting edge profiles of a second milling tool of the type shown in figure 4. This second milling tool has been used for milling and is thus worn and damaged. The first profile 120 of the first cutting edge and the second profile 122 of the second cutting edge are again measured for a length of about 15mm from the tip of the tool (with the tip of the tool located on the right of the plot). The measurements shown in figure 6 again show the deviations of the cutting edges from the nominal (expected) cutting edges and are measured using a Renishaw NC4-Blue laser tool setting system as described above.

Figure 7 is a composite plot for the first (new) milling tool generated using the measurement data for the two cutting teeth that is shown in figure 5. In particular, the composite plot shows the maximum deviation of a cutting edge as a function of the distance along the tool. It can be seen that the plot is generally flat and does not deviate much from "zero" edge deviation. The two sharp spikes (at around 7mm and 11mm) are likely to be (transient) contamination on the tool (e.g., debris or dust) that will not impact cutting performance. From this plot, it can be readily seen that good cutting performance is likely to be attained using this first tool.

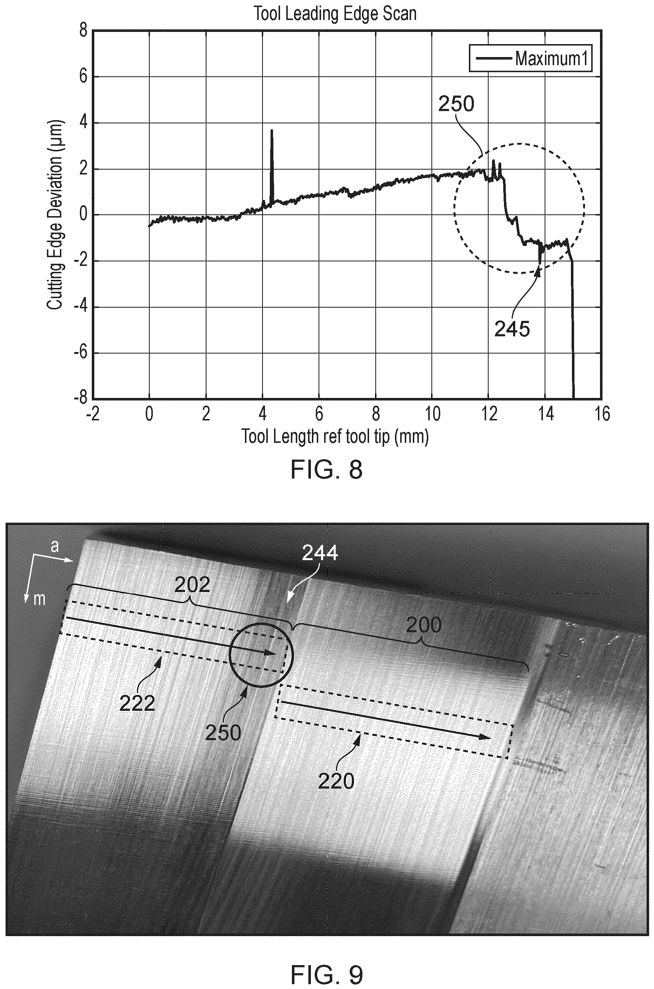

Figure 8 is a composite plot for the second (used) milling tool generated using the measurement data for the two cutting teeth shown in figure 6. In particular, the composite plot shows the maximum deviation of a cutting edge as a function of the distance along the tool. It can be seen from the composite plot that there is a pronounced step change in the cutting edge deviation near the tool tip of around 4 microns (around the 12-13mm position) that would likely translate into a workpiece defect.

Referring to figure 9, the first and second milling tools described above were used to machine adjacent tracks along the photographed Aluminium workpiece. The first milling tool was moved along the first track 200 and the second milling tool was moved along the second track 202. The longitudinal axis of each tool was aligned with the axis "a", and the tool was then rotated at high speed and translated in the direction "m" to form the respective tracks.

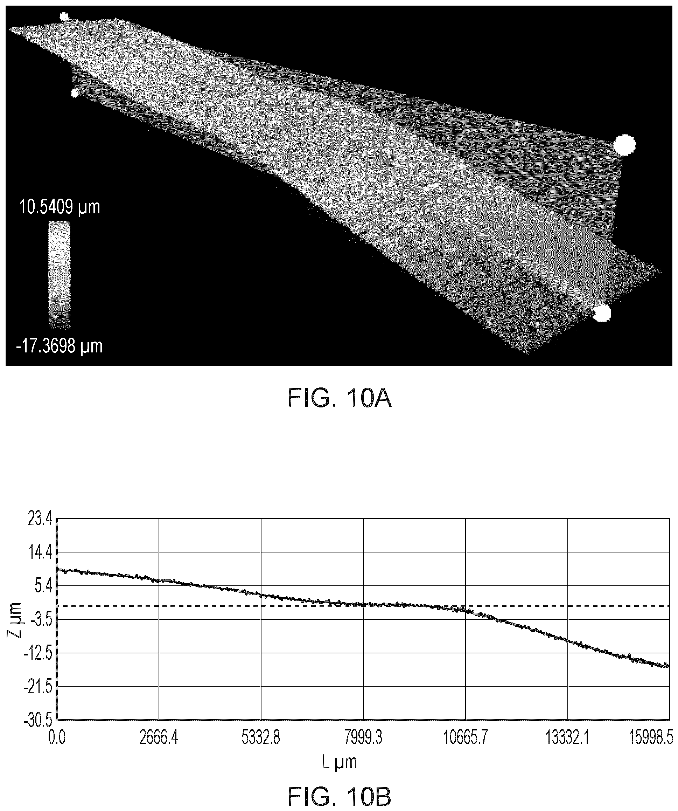

Referring to figures 10A and 10B, an optical profilometer was used to measure the surface profile of the machined workpiece shown in figure 9 in the region 220 where the first (new) milling tool had been used to remove material from the surface of the workpiece. Figure 10A shows a three-dimensional profile of the surface and figure 10B shows the two-dimensional profile along the plane shown in figure 10A.

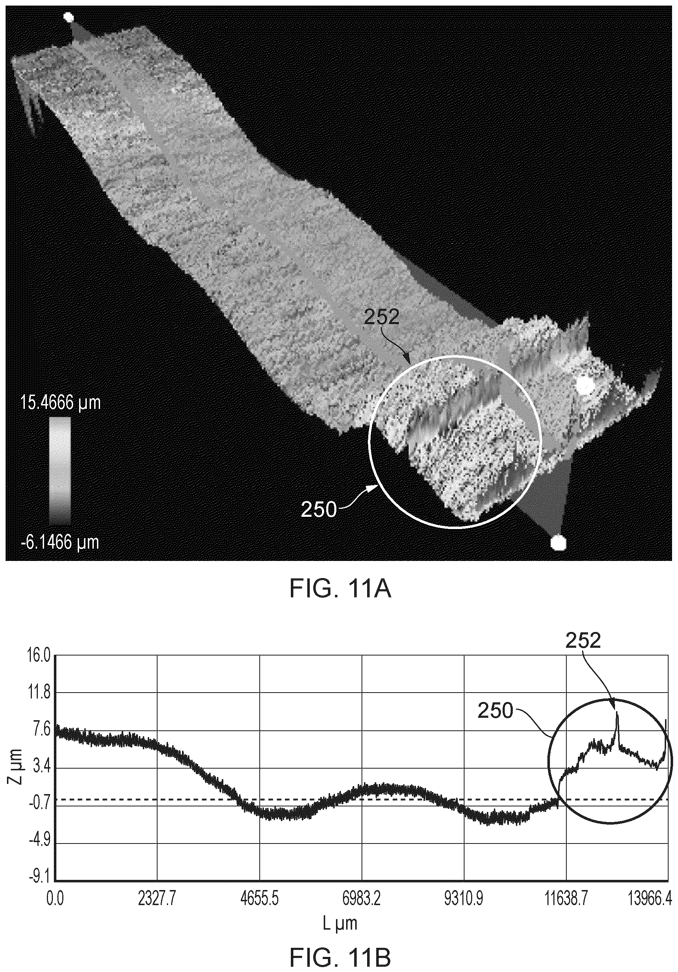

Referring to figures 11A and 11B, an optical profilometer was used to measure the surface profile of the machined workpiece shown in figure 9 in the region 222 where the second (used) milling tool had been used to remove material from the surface of the workpiece. Figure 11A shows a three-dimensional profile of the surface and figure 11B shows the two-dimensional profile along the plane shown in figure 11A.

It can be seen from the photograph of figure 9 that the region 220 milled by the first (new) milling tool appears uniform. This is supported by the composite measurements described with reference to figure 7 taken before the milling process and by the optical profilometer measurements shown in figures 10A and 10B. It is noted that figure 10B shows a slight drift in surface position along the measurement path, but it can be seen from figure 10A that the surface has a generally smooth profile that is free from any visible defects. It is therefore thought that an issue with alignment of the block in the optical profilometer led to this drift. In any case, the composite plot of figure 7 can be seen to provide a good indication that first (new) milling tool is in a condition suitable for use.

In contrast, it can be seen from the photograph of figure 9 that the region 222 milled by the second (used) milling tool include a visible stripe 244 formed by a ridge of material surrounded by an area of rough surface that is visible as darker colour. In particular, the region 250 circled in each of figures 8, 9, 11A and 11B corresponds to damage near the tip of the second (used) milling tool and the defects in the workpiece that results from this damage. For example, the peak 252 visible in figures 11A and 11B corresponds to the surface stripe 244 visible on the workpiece in figure 9 and results from the indentation 245 that is identifiable from the composite scan of figure 8.

It can thus be seen that a composite plot as shown in figures 7 and 8 can be used to predict the surface that is likely to be formed when the tool is used to cut a workpiece. This allows on-machine (in-situ) tool profile measurements to be collected and analysed to ascertain if a cutting tool will perform to a required level during a subsequent cutting operation. Moreover, it means that even if multiple chips are present the cutting tool only needs to be replaced when the overall tool damage is such that cutting quality is degraded to an unacceptable level.

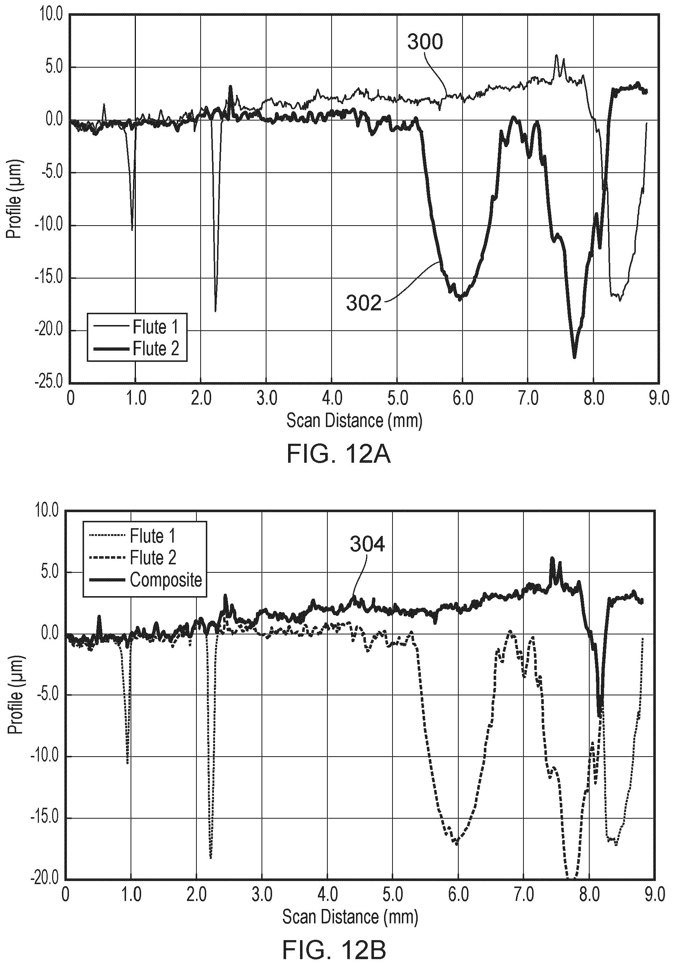

Referring to figures 12A-12C, a further example of the method for tool inspection will be described.

Figure 12A shows the measured cutting edges profile of the first cutting edge 300 and the second cutting edge 302 of a two-toothed milling tool. Again, such measurements are taken using a Renishaw NC4-Blue laser tool setting system as described above.

Figure 12B shows a composite plot 304, formed from the maximum cutting edge deviation as a function of axial position, overlaid on the other cutting edge deviations.

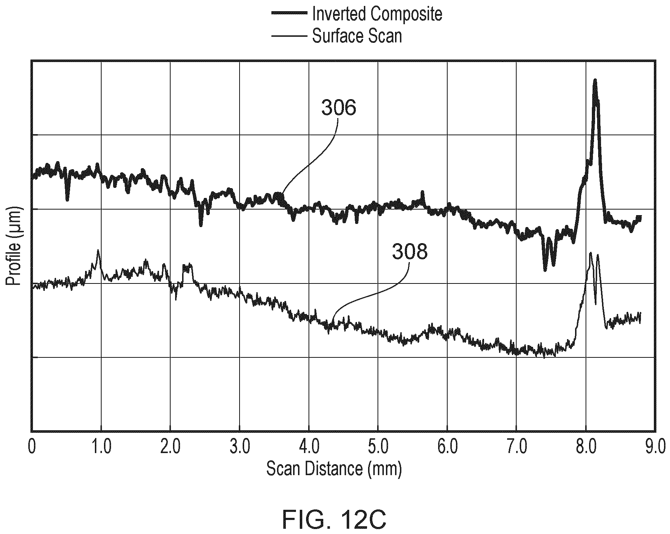

Figure 12C shows an inverted composite plot 306. This is produced by subtracting the composite plot values 304 from an arbitrary constant value, so that protrusions and recesses on the cutting tool are converted to the recesses and protrusions respectively that would be formed on the workpiece. Plotted underneath the inverted composite plot 306 is a contact measurement scan 308 of a workpiece that was machined using the cutting tool after its cutting edge profiles were measured. The y-axis is scaled similarly for the inverted composite plot 306 and the measurement scan 308, but these plots are arbitrarily shifted along the y-axis so that one is above the other to allow visual comparison. The surface profile produced by the cutting tool in a workpiece (i.e., the measurement scan 308) can be seen to be a good match with the prediction of the surface of the workpiece (i.e., the inverted composite plot 306).

The above are merely examples of the present invention and many alternatives would be possible. For example, different tool measurement devices (contact or non-contact) could be used to measure the cutting edge profiles. Similarly, different machine configurations and/or cutting tools could be measured.

## Claims

1. A method for assessing a rotatable cutting tool carried by a machine tool, the rotatable cutting tool having a plurality of cutting edges that extend along its length, and the machine tool comprising a tool measurement device for measuring the cutting tool, the method comprising the steps of;
(a) using the tool measurement device to measure a cutting edge profile of each of the plurality of cutting edges that allows cutting edge defects to be identified, and
(b) assessing if any workpiece defects would be generated when machining a workpiece using the cutting tool, the assessment comprising using the cutting edge profile measurements of step (a) to determine whether any cutting edge defects are present on more than one of the plurality of cutting edges at a plurality of axial locations along the length of the cutting tool.

2. A method according to claim 1, wherein the assessment of step (b) comprises determining whether any cutting edge defects are present on a predefined number of the plurality of cutting edges at any of the plurality of axial locations along the length of the cutting tool.

3. A method according to any preceding claim, wherein the assessment of step (b) comprises determining whether any cutting edge defects are present on all of the plurality of cutting edges at any of the plurality of axial locations along the length of the cutting tool.

4. A method according to any preceding claim, wherein each cutting edge profile measurement of step (a) comprises measuring a deviation of the cutting edge from a reference.

5. A method according to claim 4, wherein the reference comprises a reference axis, the reference axis being the axis of tool rotation.

6. A method according to claim 4, wherein the reference comprises a reference cutting edge profile for each cutting edge.

7. A method according to claim 6, wherein each reference cutting edge profile comprises a nominal cutting edge profile or a previously measured cutting edge profile and step (a) include measuring deviations of each cutting edge by comparing the measured cutting edge profile to the nominal cutting edge profile or to the previously measured cutting edge profile.

8. A method according to any one of claims 4 to 7, wherein step (b) comprises identifying the cutting edge that radially extends the most relative to its reference at each of the plurality of axial locations along the length of the cutting tool.

9. A method according to claim 8, wherein step (b) comprises forming a composite tool profile using the cutting edge location of the cutting edge that radially extends the most relative to its reference at each of the plurality of axial locations along the length of the cutting tool.

10. A method according to any preceding claim, wherein step (b) comprises a step of determining a likely size of the workpiece defect generated when the cutting tool is used to machine a workpiece and issuing a workpiece error if a predicted size of a workpiece defect exceeds a preset allowable defect size.

11. A method according to any preceding claim, wherein the cutting edge defects comprise indentations in the cutting edge.

12. A method according to any preceding claim, wherein the tool measurement device comprises a non-contact tool setting apparatus, the non-contact tool setting apparatus comprising a transmitter for passing a light beam to a receiver, the receiver generating an output signal indicative of the amount of obscuration of the light beam.

13. A method according to any preceding claim, wherein step (a) comprises using the tool measurement device to scan along each cutting edge of each cutting tooth in turn.

14. A method according to any preceding claim, wherein the rotatable cutting tool comprises a helical cutting tool having two or more cutting edges and step (a) comprises translating the helical cutting tool relative to the tool measurement device along its longitudinal axis whilst rotating the helical cutting tool, the combined translational and rotational motion enabling the tool measurement device to scan along a cutting edge to measure each cutting edge profile.

15. An apparatus comprising a machine tool having a rotatable spindle for retaining a cutting tool having a plurality of cutting edges that extend along its length, the apparatus further comprising a tool measurement device mounted to the machine tool for measuring the cutting tool when held in the spindle, wherein the machine tool comprises a controller configured to (a) enable the tool measurement device to measure a cutting edge profile of each of the plurality of cutting edges that allows cutting edge defects to be identified, and (b) assess if any workpiece defects would be generated when machining a workpiece using the cutting tool, the assessment comprising using the measured cutting edge profile measurements to determine whether any cutting edge defects are present on more than one of the plurality of cutting edges at a plurality of axial locations along the length of the cutting tool.
